# EUROPEAN PATENT SPECIFICATION

(11) **EP 2 834 572 B1**
(45) Date of publication and mention of the grant of the patent: **12.04.2023**
(21) Application number: 13760998.8
(22) Date of filing: 05.03.2013
(51) Int. Cl.: F24F 13/06, F24F 13/12, B60H 1/34

(54) **VENTILATION UNIT AND AIR DUCT SYSTEM**
LÜFTUNGSGERÄT UND LUFTKANALSYSTEM
UNITÉ DE VENTILATION ET SYSTÈME DE CONDUITS D'AIR

(30) Priority: 12.03.2012 SE 1250226
(43) Date of publication of application: 11.02.2015
(73) Proprietor: Inventiair AB, 115 26 Stockholm (SE)
(72) Inventor: SELLÖ, Martin, SE-18263 Djursholm (SE); SELLÖ, Bengt, S-114 48 Stockholm (SE); GUSTAFSSON, Madeleine, SE-11360 Stockholm (SE)
(74) Representative: Noréns Patentbyrå AB
(86) International application number: PCT/SE2013/050193
(87) International publication number: WO 2013/137803

(56) References cited:
- WO-A1-01/61253
- DE-A1- 3 303 987
- DE-A1-102006 035 336
- DE-C1- 10 155 206
- JP-A- 2007 038 711
- US-A- 832 247
- US-A- 3 699 872
- US-A1- 2008 318 510
- US-A1- 2008 318 510

## Description

### Technical area

The present invention concerns a ventilation unit intended to serve as at least one of a supply unit and a withdrawal unit, exhaust unit, for integrated use in a ventilation system. In particular, the invention concerns a unit intended to be arranged as part of an air duct for the regulation of at least one of the flow and the direction of the air.

### Background to the invention

Ventilation units for the adjustment of the flow of air are previously known and are used in various types of building, vehicle and transport means.

Ventilation systems in buildings are normally built up from a ventilation duct, for example a spiral duct, and some type of air supply unit that distributes the air throughout the room. A flow regulator, for example a baffle or mixer box, is normally arranged in a duct for the feed of air into the input air unit, in order to regulate the flow of air that is supplied to the air supply unit. The purpose of the flow regulator is to supply a desired flow of air to the air supply unit.

It is previously well-known that the air supply unit may be provided with nozzles, and that the magnitude of the flow can in this way be regulated through the choice of the number of nozzles through which air flows. The sealing can take place in a number of different ways.

An alternative way of achieving the regulation of air is to arrange two tubular ducts, one partially outside of the other, where one of the tubular ducts has openings that can be closed or covered by the second tubular duct. Such a system is described in, for example, the German patent application DE 3301570 A1 (Offenlegungsschrift), where cover plates are arranged on the inner surface of a tubular duct and can be used to close the holes. Another example of system with two tubular ducts is known from DE 33 03 987 A1.

US 832247 describes an externally located profile that is arranged on an air duct, formed with a semicircular cross-section, where the externally located profile can be displaced over the air duct in order to change the number of openings that are exposed and thus in this way to change the flow of air.

A further system for the supply of input air into a room with a flow regulator is described in the Swedish patent SE 527241. The system according to this patent comprises a flow regulator that can be applied only at the end part of an air supply duct, which limits the possibilities of the system to regulate units that are connected in series or that use ring supply.

SE 527241 describes a system solution used to ensure that the fall in pressure across the air supply unit will be larger than the fall in pressure through the duct system. This requires a system without any baffles or noise reducers. A system that has been designed in this manner is in practice difficult and unusual to use. The duct routing is often designed as a branched system that must be provided with baffles in order to distribute the pressure from the fan centre.

A further disadvantage with the systems described above is that they are difficult to integrate in existing ventilation systems in buildings: this often requires major and complicated work.

One disadvantage of existing units for ventilation systems is that it is difficult to regulate in a simple and efficient manner the magnitude of the flow of air and the direction of the flow of air. They are, furthermore, often difficult to clean and it is difficult to read off the current flow of air. Existing systems often contain many parts that not only make it complicated to inspect them but also introduce the risk of collecting dirt and causing unnecessary falls in pressure.

### Purpose of the invention

One purpose of the present invention is to achieve a ventilation unit that can be integrated in a simple manner into an existing ventilation system in buildings. A further purpose of the invention is to achieve an alternative solution to the problem of regulating the flow of air and controlling the direction of the flow of air in an air supply system. A further purpose is to reduce the fall in pressure and the creation of noise through the regulation of the flow of air.

A further important purpose of the invention is to achieve an adjustable ventilation system with few component parts, which will make possible, among other things, a simple manufacturing process and lower production costs.

The present invention achieves a ventilation unit that is easy to mount, adjust and dismount. The ventilation unit according to the invention leads to it no longer being necessary to close nozzles manually in order to adjust the magnitude of the flow, and it no longer being necessary to provide the unit with a separate baffle, which is an advantage since such baffles produce an unnecessary fall in pressure and unnecessary noise that can be experienced as disturbing.

According to one aspect of the present invention, these purposes are achieved through a ventilation unit designed as specified in claim 1.

Various preferred embodiments of the ventilation unit according to the invention are specified in the dependent claims 2-10.

When the ventilation unit is mounted as a part of an air supply duct, it forms a passage for the flow of air. One part of the ventilation unit is provided with openings, whereby the number of exposed openings in the unit can be adjusted in a simple manner. By increasing the number of exposed openings the amount of air fed into the room is increased, and by reducing the number of exposed openings the amount of air fed out into the room is decreased. It is also possible to rotate around the central axis of the unit that part of the ventilation unit that comprises openings, which means that the direction of the flow of air can be adjusted easily.

When the ventilation unit is mounted as a part of an exhaust air duct, it is provided with openings that are directed inwards, in order to introduce in an efficient manner air through the ventilation unit into the existing duct system. By increasing the number of exposed openings, the amount of air that can be extracted from the room is increased.

According to a further aspect of the present invention, an air duct system for a ventilation plant designed according to the dependent claim 11 is obtained.

Various preferred embodiments of the air duct system according to the invention are specified in the dependent claims 12-15.

The invention provides also the possibility to adjust the flow at one or several ventilation units arranged in series along the same air duct.

Other advantages and applications of the present invention will be made clear by the detailed description given below and by the attached drawings.

### Summary of the invention

The invention concerns a ventilation unit as defined in claim 1.

The section of tube with openings may be mounted between two fixed sections of tube or it may be connected to one fixed section of tube, in which case it constitutes an end part. The openings may be covered or exposed either by the section of tube with openings being displaced or by a sheath or a lid covering one or several openings.

The ventilation unit has also been adapted to be mounted in an existing air duct system, which air duct system may be a system with a ring structure.

The invention will now be described in the form of nonlimiting embodiments, illustrated with the aid of the attached drawings.

### Brief description of drawings

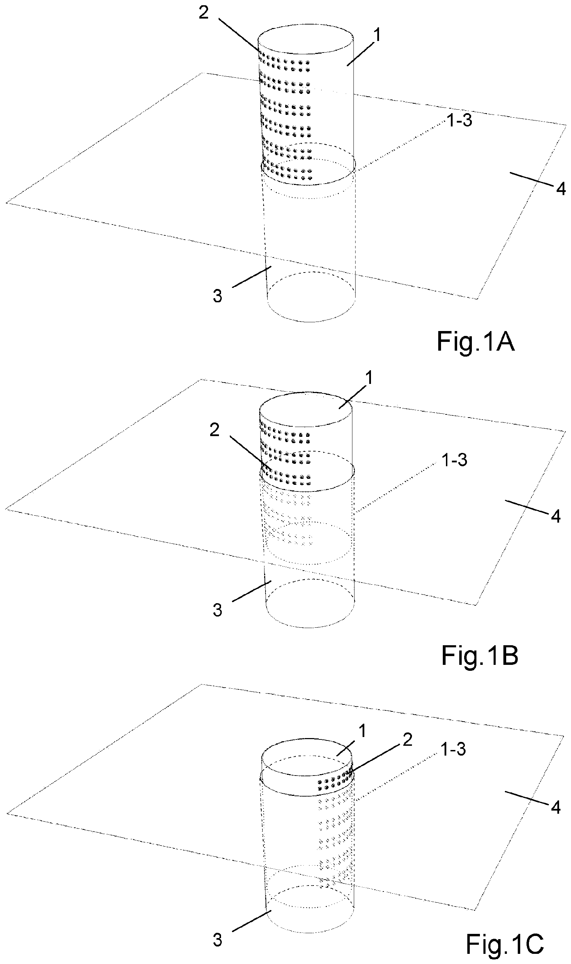

Figures 1A-C show the ventilation unit mounted at a wall, floor or ceiling, comprising a displaceable section of tube provided with openings, which unit is axially connected to, and axially displaceable relative to, a second, fixed section of tube. Figure 1A shows the displaceable section of tube at its fully extended position; Figure 1B shows the displaceable section of tube partially inserted into the second section of tube; and Figure 1C shows the displaceable section of tube in a nearly fully inserted position.

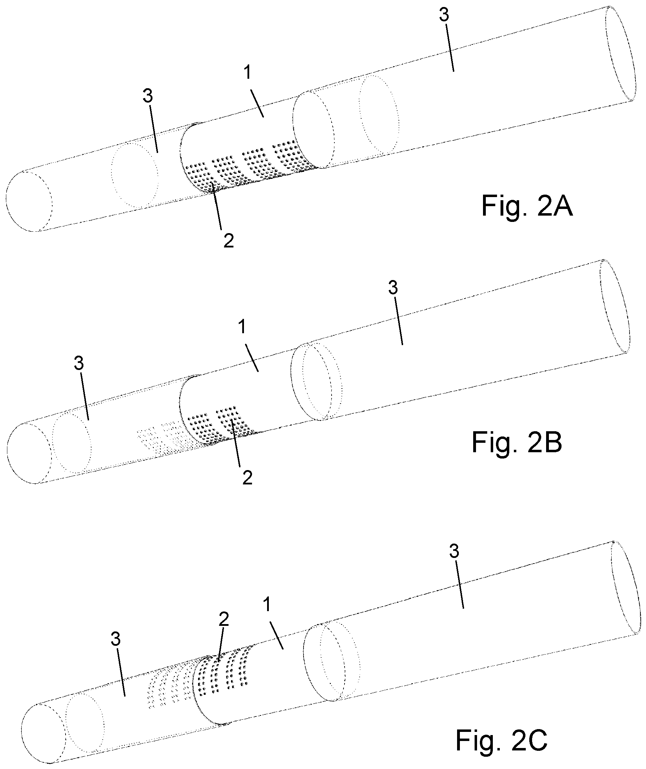

Figures 2A-C show the ventilation unit, comprising in this embodiment two fixed sections of tube and one displaceable section of tube arranged between, and inside of, the two fixed sections of tube, whereby the displaceable section of tube has several sections with openings. Figure 2A shows the displaceable section of tube introduced into the two fixed sections of tube, with four sections of openings exposed.
Figure 2B shows the displaceable section of tube displaced into one of the fixed sections of tube such that only two sections of openings are exposed. Figure 2C shows the displaceable section of tube displaced into one of the fixed sections and furthermore rotated such that the direction of air flow has been adjusted.

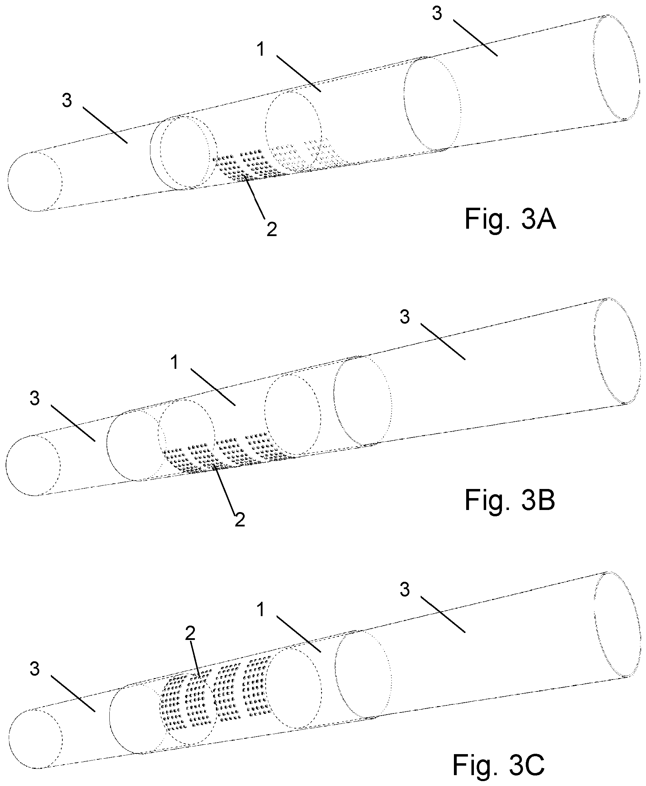

Figures 3A-C show the ventilation unit, comprising in this embodiment two fixed sections of tube and one displaceable section of tube arranged between, and outside of, the two fixed sections of tube, whereby the displaceable section of tube has several sections with openings. Figure 3A shows the displaceable section of tube arranged outside of the fixed sections of tube and displaced over one of the fixed sections of tube such that two sections of openings are covered by the fixed section of tube. Figure 3B shows the displaceable section of tube arranged outside of the fixed sections of tube such that all sections with openings are exposed. Figure 3C shows the displaceable section of tube arranged outside of the fixed sections of tube, displaced such that all sections with openings are exposed and, in addition, rotated such that the direction of air flow has been adjusted.

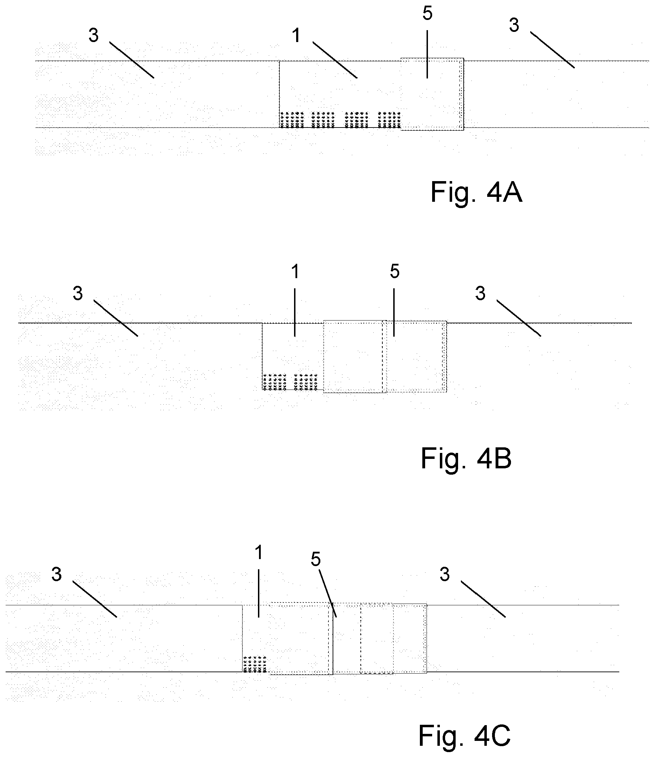

Figures 4A-C show the ventilation unit, comprising in this embodiment three fixed sections of tube, of which the intermediate fixed section of tube is provided with openings distributed in several sections, and a displaceable section of tube, one that can be extended, in the form of a telescopic sheath 5 that can be extended in several sections. Figure 4A shows the telescopic sheath 5 arranged outside of one of the fixed sections of tube, in a position at which the sheath 5 does not cover any of the openings 2 in the intermediate fixed section of tube 1. Figure 4B shows the displaceable telescopic sheath 5 arranged outside of one of the fixed sections of tube 3, and where the sheath 5 is partially extended in order to cover two of the sections with openings in the intermediate fixed section of tube. Figure 4C shows the telescopically displaceable sheath 5 arranged outside of one of the fixed sections of tube 3 and where the sheath 5 is nearly fully extended and thus covers nearly all of the sections with openings 2 in the intermediate fixed section of tube 1.

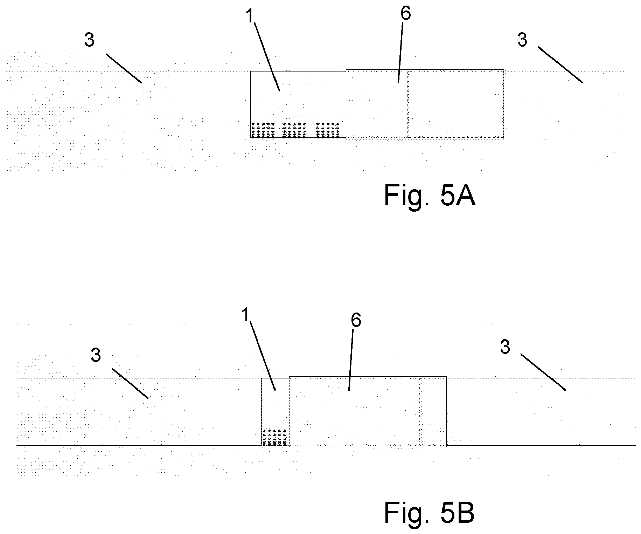

Figures 5A-B show the ventilation unit, in this embodiment comprising three fixed sections of tube 1, 3, 3, of which the intermediate fixed section of tube 1 is provided with openings 2 distributed in several sections, and a displaceable section of tube 6, one that can be extended. Figure 5A shows the displaceable sheath 6 arranged outside of one of the fixed sections of tube 3 in a position in which the openings 2 in the intermediate section of tube 1 are not covered. Figure 5B shows the displaceable sheath 6 arranged outside of one of the fixed sections of tube 3 in a position in which two sections of the openings 2 in the intermediate section of tube 1 are covered by the displaceable sheath 6.

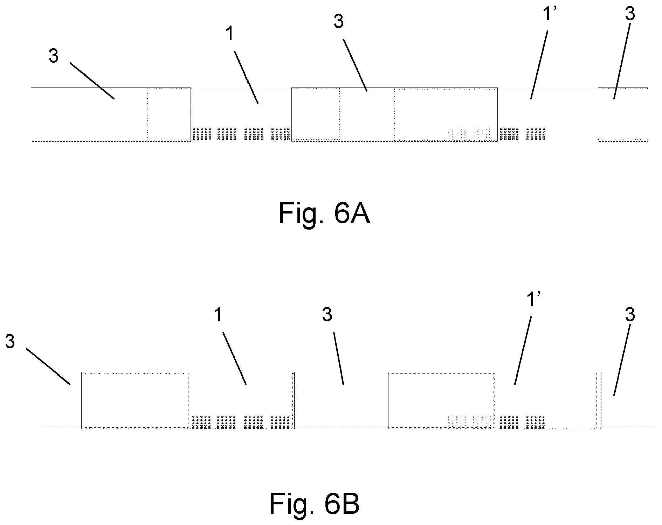

Figures 6A-B show connection in series of several ventilation units. Two sections of tube 1, 1' with openings have been arranged in series with a fixed section of tube 3 between the two displaceable sections and with fixed sections of tube 3 at the sides of each displaceable section 1, 1'. One 1' of the displaceable sections is displaced within the fixed sections of tube 3 such that only two sections of openings 2 are exposed, while the second displaceable section 1 is arranged such that all sections with openings 2 are exposed. Figure 6A shows an embodiment in which the displaceable sections 1, 1' have been arranged inside of the fixed sections of tube 3. Figure 6B shows an embodiment in which the displaceable sections 1, 1' have been arranged outside of the fixed sections of tube 3.

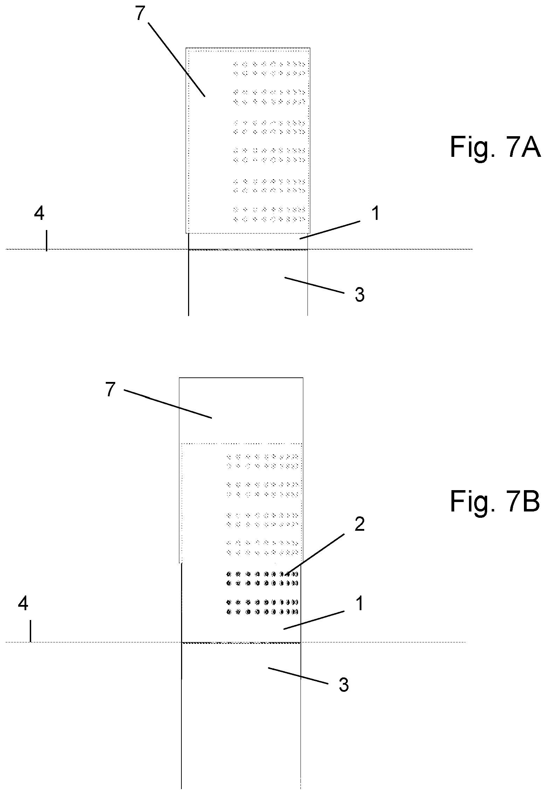

Figures 7A-B show the ventilation unit mounted at a wall, floor or ceiling 4, comprising a section of tube 1, provided with openings 2, that is axially connected with, and axially displaceable relative to, a second, fixed section of tube 3. The ventilation unit is provided also with a further external displaceable section of tube 7 that is closed at its outermost end, arranged outside of the section of tube 1 provided with openings 2. Figure 7A shows the ventilation unit where the external displaceable section of tube 7 is arranged such that it covers all the openings 2 in the section of tube 1 that is provided with openings. Figure 7B shows the ventilation unit where the external displaceable section of tube 7 is partially extended such that two sections with openings 2 are exposed while other sections are covered.

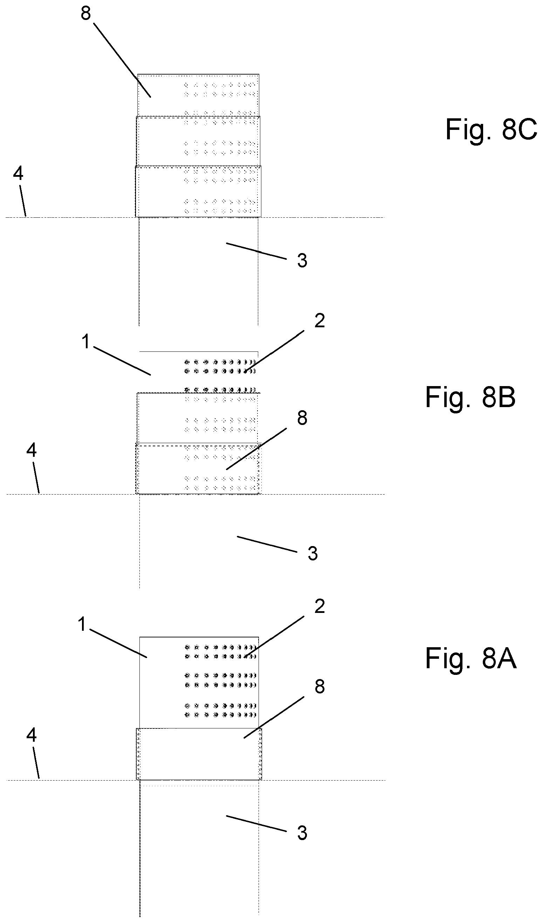

Figures 8A-C show the ventilation unit mounted at a wall, floor or ceiling 4, comprising a section of tube 1, provided with openings 2, that is axially connected with, and axially displaceable relative to, a second, fixed section of tube 3. The ventilation unit is provided also with a further external displaceable section of tube 8, in the form of an extendable sheath, arranged outside of the displaceable section of tube that is provided with openings. Figure 8A shows the ventilation unit where the sheath 8 is fully withdrawn. Figure 8B shows the ventilation unit where the sheath 8 is partially extended and covers a portion of the openings 2, while Figure 8C shows the ventilation unit where the sheath 8 is fully extended and covers all openings 2.

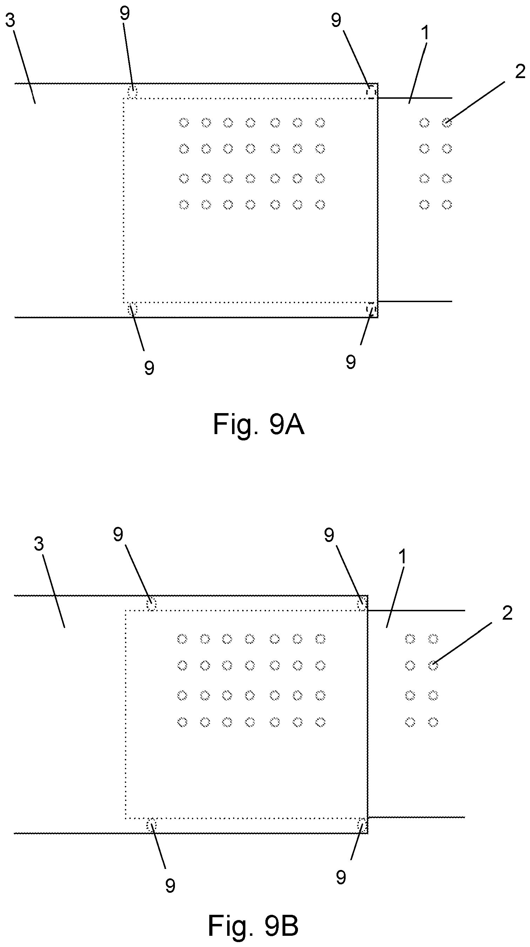

Figures 9A-B show the ventilation unit provided with gaskets or spacer material 9. Figures 9A-B show a detailed view of a part of the ventilation unit where a displaceable section of tube 1, provided with openings 2, has been arranged inside of a second section of tube 3. Figure 9A shows gaskets or spacer material 9 arranged at the inner surface of the second section of tube 3 and at the outer surface of the displaceable section of tube 1. Figure 9B shows gaskets or spacer material 9 arranged solely at the outer surface of the displaceable unit 1, between the sections with openings 2.

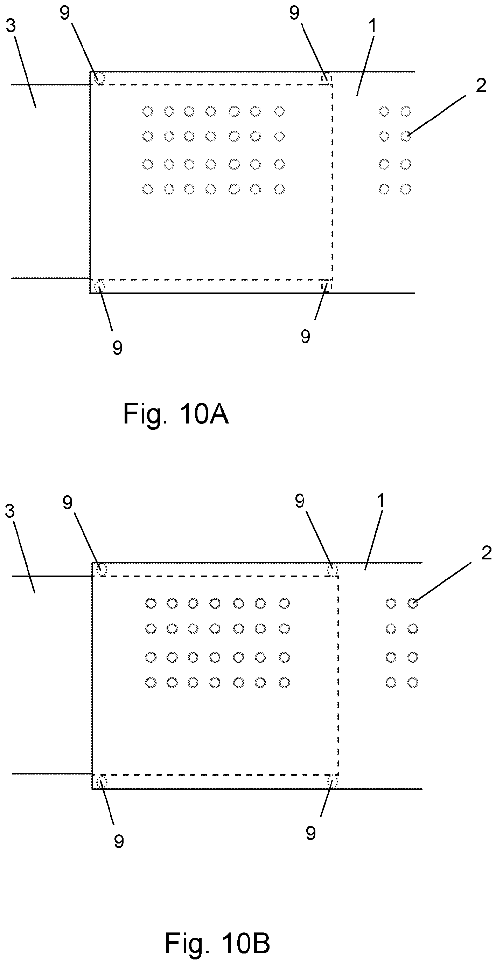

Figures 10A-B show the ventilation unit provided with gaskets or spacer material 9. Figures 10A-B show a detailed view of a part of the ventilation unit where a displaceable section of tube 1, provided with openings 2, has been arranged outside of a second section of tube 3. Figure 10A shows gaskets or spacer material 9 arranged at the outer surface of the second section of tube 3 and at the inner surface of the displaceable section of tube 1. Figure 10B shows gaskets or spacer material 9 arranged solely at the inner surface of the displaceable unit 1.

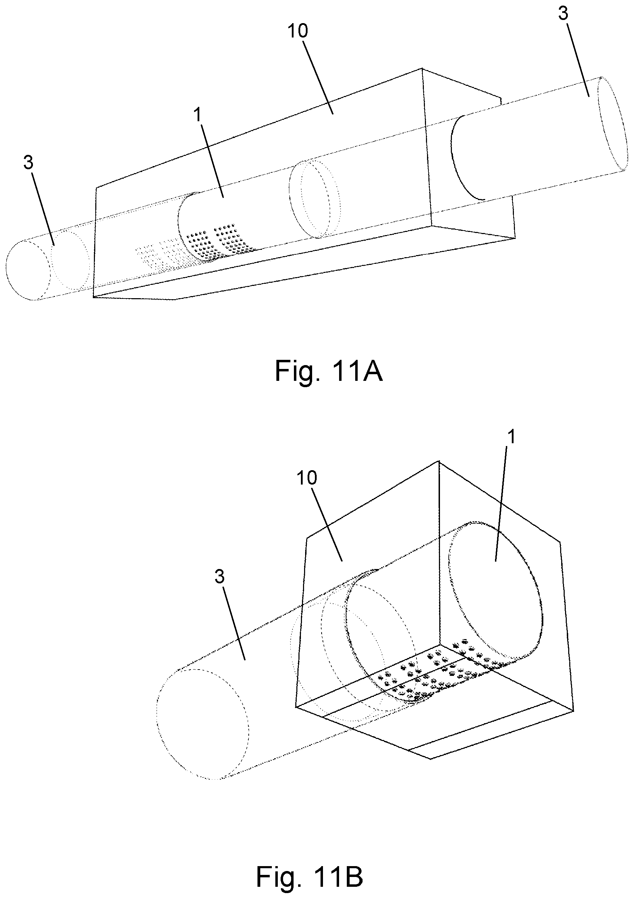

Figure 11A shows the ventilation unit, comprising in this embodiment two fixed sections of tube 3 and one displaceable intermediate section of tube 1 provided with several sections with openings 2. The ventilation unit is further arranged inside a pressure chamber 10. The displaceable section of tube 1, provided with openings 2, is arranged inside of or outside of (not shown in the drawings) two fixed sections of tube 3. The displaceable section of tube 1 is, in the embodiment that is illustrated, displaced inside of the fixed sections of tube 3 such that two sections with openings 2 are covered by one of the fixed sections of tube 3 while two sections with openings 2 are exposed within the pressure chamber 10. The displaceable section of tube 1 may be displaceable also outside of the fixed sections of tube 3 (not shown in the drawings). Figure 11B shows the ventilation unit, comprising in this embodiment one fixed section of tube 3 and one displaceable section of tube 1 provided with openings 2. The displaceable unit 1 is arranged as an end piece in a pressure chamber 10. The displaceable section of tube 1 may be arranged inside of or outside of (not shown in the drawings) the fixed section of tube 3, with one or several openings 2 exposed within the pressure chamber 10.

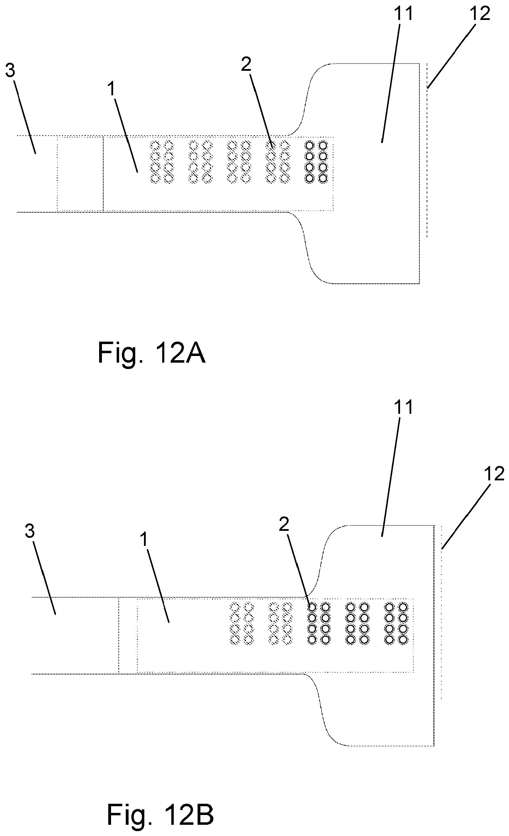

Figures 12A-B show the ventilation unit, comprising in this embodiment one fixed section of tube 3 and one displaceable section of tube 1 provided with several sections with openings 2 arranged in a pressure chamber 11 with a circular cross-section. The pressure chamber 11 is subsequently provided with an external front 12. Figure 12A shows the displaceable section of tube 1 partially extended in the pressure chamber 11 such that a first section with openings 2 is exposed within the pressure chamber 11. Figure 12B shows the displaceable section of tube 1 partially extended in the pressure chamber 11 such that three sections with openings 2 are exposed within the pressure chamber 11.

### Detailed description of the invention

Figures 1A-C show an embodiment of the ventilation unit according to the invention, comprising a displaceable section of tube 1 provided with openings 2, whereby the section of tube 1 is axially connected to a second, fixed, section of tube 3. The openings will be described in more detail below. When the displaceable section of tube 1 has been inserted into the fixed section of tube 3, there is formed an area of overlap 1-3 at the connecting end parts. The unit is arranged at a wall, a floor or a ceiling 4, whereby the section of tube 1 is located, at least partially, outside of the wall, floor or ceiling, while the second section of tube 3 is located, at least a major part of this section of tube, inside of the wall, floor or ceiling 4. The displaceable section of tube 1 can be displaced in the axial direction and can be introduced into the fixed section of tube 3 in order to cover one or several rows of openings, or it can be withdrawn from the fixed section of tube 3 in order to expose one or several rows of openings 2. The magnitude of the flow of air is adjusted in this way. Figure 1A shows the section of tube 1 with all rows of openings 2 exposed, which leads to air being supplied to the room through all openings. Figure 1B shows the unit in which the section of tube 1 has been partially inserted into the section of tube 3, which leads to a portion of the openings 2 in the section of tube 1 being covered, and the flow of air thus being reduced from the flow that is achieved when all the openings are open. The displaceable section of tube 1 can furthermore be rotated around its own axis, which makes it possible to adjust the direction of the flow of air. Figure 1C shows the unit where the section of tube 1 is nearly fully inserted into the second section of tube 3, which leads to a low flow of air, and the section of tube 1 is furthermore rotated around its own axis, which leads to the direction of the flow being changed.

The circumference of the section of tube 1 in, among other drawings, Figures 1A-C, is adapted such that it is somewhat smaller than the fixed section of tube 3 such that it can be introduced into and subsequently axially displaced, principally in the axial direction. In a second embodiment (shown in, for example, Figures 3A-C, 6B, 10A-C), the circumference of the section of tube 1 is adapted to be somewhat larger than the circumference of the fixed section of tube 3, such that it can be arranged outside of at least one section of tube 3 and subsequently be axially displaced principally in the axial direction outside of at least one fixed section of tube 3. The section of tube 1 can be arranged either outside of or inside of the section of tube 3 in all of the embodiments illustrated.

When the section of tube 1 is displaced in the axial direction, the number of exposed openings 2 changes and the flow of air can be regulated in this manner. When the section of tube 1 is arranged inside of at least one section of tube 3, the section of tube is displaced into the section of tube 3 and the wall of the section of tube 3, and an area of overlap 1-3 is created where the wall of the section of tube 3 covers one or several openings 2 in the wall of the section of tube 1. When the section of tube 1 is arranged outside of at least one section of tube 3, the section of tube 1 is displaced outside of the section of tube 3 and an area of overlap 1-3 is created in the same way, where one or several openings 2 in the wall of the section of tube 1 are covered by the wall of the section of tube 3.

In a further embodiment, the displaceable section of tube 1 is arranged between two fixed sections of tube 3, as is shown in Figures 2A-C. The displaceable section of tube 1 is provided with one or several rows of openings 2 that can be covered or exposed through the axial displacement of the displaceable section of tube 1 inside of the fixed sections of tube 3. In the basic design, the displaceable section of tube 1 is arranged in the middle between the two fixed sections of tube 3 (Figure 2A) such that all openings 2 are exposed. The displaceable section of tube 1 can subsequently be displaced in the axial direction such that rows, or sections, of openings 2 are covered by either the first or the second fixed section of tube 3. The unit is shown in Figure 2B displaced in its axial direction such that only two sections of openings 2 are exposed. The higher the number of exposed openings 2, the greater will be the magnitude of the flow of air supplied to the room or extracted from the room.

The displaceable section of tube 1 may be arranged also as an externally located part outside of one or several fixed sections of tube 3. Figures 3A-C show an embodiment in which the displaceable section of tube 1 with openings 2 has been mounted outside of two fixed sections of tube 3. The displaceable section of tube 1 can be displaced, as has been previously described, in the axial direction and openings 2 can in this way be exposed or covered. Figure 3C shows an embodiment in which the displaceable section of tube 1 has been arranged outside of two fixed sections of tube 3 and subsequently rotated in order to adjust the direction of the flow of air.

In a further embodiment, shown in Figures 4A-C and 5A-B, a fixed section of tube 1 with openings 2 is arranged between an additional two fixed sections of tube 3. A displaceable sheath is subsequently arranged outside of one of the fixed sections of tube 3, which sheath can be either a telescopic sheath 5 that can be extended in sections (Figures 4A-C) or a sheath 6 that can be extended in one complete section (Figures 5A, 5B). The sheath 5 or 6 can be extended or withdrawn, respectively, in order to cover or expose openings 1 in the wall of the tube of the intermediate section of tube 1. In the embodiment illustrated in Figures 4A-C, a part of the telescopic sheath 5 may be extended in order to cover one or several sections, or parts of one or several sections, with openings 2 in the intermediate section of tube 1. The higher the number of sections of the sheath that are extended, the greater will be the number of openings 2 that are covered, and the magnitude of the flow of air will consequently be reduced. The sheath 5 may be subsequently withdrawn, fully or partially, in order in this way to increase again the flow of air. In the embodiment illustrated in Figures 5A-B, a complete sheath 6 is used, arranged at the end of one of the fixed sections of tube 3. The sheath 6 may subsequently be displaced over the intermediate section of tube 1 towards the second fixed section of tube 3 in order in this way to cover openings 2 in the intermediate section of tube 1 and thus to adjust the magnitude of the flow of air.

Sections of tube 1, 1' with openings 2 are arranged connected in series in a further embodiment, illustrated in Figures 6A and 6B. Each section of tube 1, 1' may be either displaceable or fixed arranged between two sections of tube 3. The sections of tube 1, 1' may be arranged inside of or outside of the sections of tube 3. The embodiment illustrated in Figures 6A and 6B displays connection in series of two sections of tube 1, 1' with openings. One skilled in the arts will realise that the invention is not limited to be two sections of tube connected in series: it can comprise as many sections of tube 1, 1' connected in series as are required in order to achieve good ventilation. The sections of tube 1, 1' connected in series may be provided with also a sheath or other covering section of tube 5, 6, 7, 8 as has been describe in the paragraph above, and as will be described in more detail below.

In a further embodiment, the section of tube 1 is connected to the section of tube 3 at a wall, floor or ceiling 4, and a displaceable section of tube 7 (Figures 7A, 7B) or a telescopic sheath 8 (Figures 8A-C) is subsequently arranged outside of the section of tube 1. The displaceable section of tube 7 is closed at its outer end and acts as a cover at the end, whereby the section of tube 7 can cover openings 2 (Figure 7A) or it can be withdrawn and thus expose one or several rows of openings 2 (Figure 7B). The telescopic sheath 8 can be extended in sections and it is connected at one end to the section of tube 1 next to the wall, ceiling or floor, and it can subsequently be displaced in order to cover or expose openings 2. The telescopic sheath 8 is shown withdrawn in Figure 8A and connected to the section of tube 1 next to the wall, ceiling or floor 4, while a section of the sheath 8 has been extended in Figure 8B and a portion of the openings 2 have been covered. All sections of the telescopic sheath 8 have been extended in Figure 8C, and thus the sheath covers all openings 2 in the section of tube 1. The telescopic sheath 8 may subsequently be withdrawn again in order to expose more openings 2. The size of the telescopic sheath 8 is adapted such that it can be arranged outside of the section of tube 1 and such that it can have a greater number of extendable sections than shown in the attached drawings.

It is preferable that the section of tube 1 or the sections of tube 3, or both the section of tube 1 and the sections of tube 3, be provided with gaskets or other spacer material 9 that forms a seal between the section of tube 1 and one or several sections of tube 3 (Figures 9A-B, 10A-B), which ensures that the openings 2 that are not exposed do not cause any fall in pressure, nor do they cause any disturbing noise. When the section of tube 1 is arranged inside of a section of tube 3, the gaskets are arranged at the inner surface of the section of tube 3 and at the outer surface of the section of tube 1 (Figure 9A), while they are arranged at the outer surface of the section of tube 3 and at the inner surface of the section of tube 1 when the section of tube 1 is arranged outside of a section of tube 3 (Figure 10A). The gaskets or the spacer material 9, or the gaskets and the spacer material 9, may be arranged also at the outer surface of the section of tube 1 between sections with openings 2 (Figure 9B, 10B), which means that the sections with openings 2 that are not exposed have a position that is locked between the two gaskets 9 in the air duct.

Figures 11A-B show a further embodiment in which the section of tube 1 is connected to at least one fixed section of tube 3 in a pressure chamber 10 with one or several openings (Figure 11A, 11B). The section of tube 1 may be arranged such that it can be displaced inside of or outside of (not shown in the drawings) two fixed axially connected sections of tube 3 in a pressure chamber 10 (Figure 11A) or it may be arranged as an end part connected inside of (Figure 11B) or outside of (not shown in the drawings) a further section of tube 3 in a pressure chamber 10. The section of tube 1 may be provided also in this embodiment with a sheath or other displaceable externally located section of tube 5, 6, 7, 8 (not shown in the drawings).

The pressure chamber 10 may be of different sizes and forms, and the displaceable section of tube 1 may be arranged outside of (not shown in the drawings) or inside of one or several axially fixed connected sections of tube 3.

A fixed axial section of tube 3 is connected at one of its ends to a pressure chamber 11 with a circular cross-section in a further embodiment. The displaceable section of tube 1 can be axially connected to and displaced in the pressure chamber 11 and the section of tube 3 (Figure 12A, B). The pressure chamber 11 may, in turn, be provided with an external front 12. The displaceable section of tube 1 can be displaced into or out through the pressure chamber 11 with a circular section of tube 11 or section of tube 3. When the displaceable section of tube 1 is displaced out from the pressure chamber 11, the flow of air 11 increases (Figure 12B) above the flow that occurs when it is inserted into the section of tube 3 (Figure 12A). The section of tube 1 may be also inserted into the section of tube 3 also such that no openings 2 are exposed in the pressure chamber 11 (not shown in the drawings).

The section of tube 1 with openings 2 may have openings arranged in one or several sections, where the sections are located at a distance from each other. The number of openings 2 in each section may be varied according to the dimension of the section of tube 1 and according to the room that is to be ventilated. Sections with 2 or 5 rows are shown in the attached drawings, but these are not to be regarded as limiting in any way. It is possible to achieve good distribution of the air in a simple manner by the use of sections with nozzles.

The ventilation unit has at least one section of tube 1 with openings 2, and it is preferable that it has at least two rows of openings in the direction of its circumference, in order for it to be possible to adjust the magnitude of the flow of air. The rows are mutually parallel and extend over at least a part of the circumference of the unit. It is preferable that the openings 2 are air nozzles, but they may be also other types of hole or slot.

The locations of the openings 2 in the wall of the section of tube 1 may be symmetrical or non-symmetrical. The rows may be placed with an increasing number of openings per row, which gives further opportunities for adjusting the flow.

The regulation of the flow of air may take place either through the section of tube 1 with openings 2 being inserted into or drawn out from a second section of tube 3, or through a telescopic sheath 5, 8 or another sheath 6, being used to cover the openings. When the unit is inserted into a section of tube 3 without openings, one or several rows in the direction of its circumference, or whole sections, are covered, and the amount of air that can be supplied or withdrawn through the openings 2 is reduced, as the number of exposed openings 2 is limited.

In order to be able to adjust the direction of the flow of air, the displaceable section of tube 1 can be rotated around a central axis, as is shown in, for example, Figures 1C and 2C, where the mouths of the openings 2 have been turned to a different position from that shown in Figures 1A, B and 2A, B, respectively. The flow of air into a room can in this way be directed such that it interacts with the natural movements of air in the room and creates an indoor climate without draughts.

In the case in which the section of tube 1 is arranged as an end piece of an air duct, it is provided with an end cover for the tube. Such an end cover may be provided with a handle such that it is possible in a simple manner to draw out or press in the section of tube 1 into a fixed section of tube 3 and in this way adjust the number of openings exposed.

In the case in which the unit is to act as an air exhaust unit, the section of tube 1 is provided with one or several rows of punched openings, preferably nozzles, in the axial direction arranged around the complete circumference of the section of tube 1. The number of openings is adapted to the circumference of the section of tube 1. A "nozzle" is to be understood in this application to be all types of air opening with a streamlined outlet.

The ventilation unit may be mounted either horizontally or vertically, and such that it can be extracted from a wall, floor or ceiling, thus making it possible for it to be hidden when its use is not required.

It is preferable that the diameter of the openings is 2-50 mm and the distance between centres of the openings (c/c) is at least 5 mm. It is preferable that the dimension of the blind sections located between the sections with openings is 1.5 times the diameter of the openings.

A maintained or increased fall in pressure across openings is an advantage within certain fields of ventilation technology, such that the desired function can be achieved despite a reduced magnitude of flow of air. This function is achieved through the present invention by the magnitude of the flow of air being adjusted through the number of exposed nozzles, and not through a reduced fall in pressure in the duct system.

The ventilation unit according to the invention conserves energy since the magnitude of the flow can be adjusted, such that, for example, a lower volume of air is used during that part of the day during which fewer people are in a room.

The ventilation unit can furthermore also be supplemented with a control function that automatically modifies the magnitude of the flow of air at different times of the day, or when the air quality in a room becomes poorer.

For the axial displacement of the section of tube 1 inside or outside of one or several sections of tube 3, either manual adjustment or mechanical adjustment with the aid of electrical components, hydraulic components, or similar may be used, which are well known for one skilled in the arts.

The term "air duct system" in the present invention comprises all types of air system that have a fan, in which the fan may be, for example, a duct fan or a fan centre. Examples of such systems are local ventilation equipment such as air conditioning equipment and ventilation units connected to conventional air ducts, but the application is not to be regarded as in any way limited to these examples.

The section of tube 1, 1' may, in all the embodiments described, be designed as a rotatable section of tube for the adjustment of the direction of the flow of air.

The term "fixed section of tube" in the present invention is to be considered to be fixed arranged relative to a displaceable section of tube. The fixed sections of tube are normally mounted such that they can be rotated and adjusted, while not being displaceable along the axial direction.

It is preferable that the sections of tube in the present application have a circular cross-section, which is intended to comprise also a cross-section that is elliptical.

A further advantage of the ventilation unit according to the invention is that it is possible to mount the section of tube 1 in an existing air duct system through a part of the existing ducting (such as a spiral duct) being cut such that a section of tube 1, of a length that corresponds to that of the cut piece together with overlapping parts, can be mounted as an intermediate part, where the remaining duct constitutes fixed sections of tube 3 on both sides of the section of tube 1.

The system provides the possibility also of demounting the section of tube 1 and removing it from the air duct in order to at least one of clean and inspect the duct system and the section of tube 1. The system according to the invention has the advantage also that it does not comprise any loose parts in the system or the duct, which means that there is no risk that such parts become loose, collect dirt, or cause a fall in pressure.

A further advantage of the unit according to the invention is that it can be connected in a ring structure, and it does not need to be branched using a T-piece at each unit for the control of the amount of flow in different rooms. The invention eliminates in this way the extra fall in pressure that normally arises at such branch points. It is possible also to adjust the flow at one or several sections of tube 1 that are arranged in series in a ventilation system, such as a ring supply system. The sections of tube 1 in a series system may be adjusted either all at the same time or individually.

As has been previously mentioned, the fall in pressure across the air openings is maintained or increased using manual or mechanical methods, such as "variable air volume" functionality, where several units are connected in series. This cannot be achieved with the systems that are currently on the market.

The ventilation unit according to the present application concerns an integrated and flexible air feed tube (section of tube 1) for conventional air ducts, where the air supply tube is the active part that controls the settings. The air feed tube is provided with conventional duct fittings such as seals and spiral ducting. The unit according to the invention provides a unique advantage in that it is possible to adjust the magnitude of flow separately in each air feed tube or in each room, or in both each air feed tube and each room, in a system that is connected in series.

## Claims

1. A ventilation unit intended to serve as at least one of a supply unit and an exhaust unit in an air duct system in a ventilation plant, wherein
- the ventilation unit comprises at least two sections of tube (1, 3) that can be connected with a common axis with mutually adapted dimensions,
- at least one of the said sections of tube (3) constitutes a fixed part that is connectable to the said air duct system,
- at least one of the said sections of tube (1) can be displaced relative to at least one axially connected fixed section of tube (3),
- two of the said sections of tube that can be connected along their axis are mutually displaceable and form an area of overlap (1-3) at their connecting end parts, whereby only one of these sections of tube (1) has one or several openings (2) that can be opened in the wall of the tube next to the said area of overlap (1-3), and
- the flow of air through the said one or several openings (2) that can be opened can be regulated with respect to both its magnitude and its direction, through displacement and rotation, respectively, of the displaceable sections of tube (1) in relation to the at least one fixed section of tube (3), wherein the displacement by rotation around its own axis adjusts the direction of the flow of air and the displacement in axial direction adjusts the magnitude of the flow of air.

2. The ventilation unit according to claim 1,
**characterised in that**
- the ventilation unit comprises at least three sections of tube (1, 3, 3) that can be connected with a common axis with mutually adapted dimensions,
- at least two of the said sections of tube (3, 3) are constituted by fixed parts of the said air duct system and the third section of tube (1) constitutes an intermediate part that can be displaced through at least rotation, and that is provided with the said one or several openings (2) that can be opened (2) in the wall of the tube, and
- the direction of the flow of air can be regulated through rotation of the displaceable section of tube (1).

3. The ventilation unit according to claim 2,
**characterised in that**
the ventilation unit in addition comprises at least one further displaceable section of tube (5, 6, 8) arranged outside of one of the fixed sections of tube (3), whereby the additional section of tube (5, 6, 8) can be displaced and can cover or reveal openings (2) in the third section of tube (1), whereby also the magnitude of the flow of air can be regulated through displacement of the external section of tube (5, 6, 8).

4. The ventilation unit according to claim 1,
**characterised in that**
- a first section of tube (1) is provided with the said one or several openings (2) in the wall of the tube that can be opened, and
- at least one second section of tube (5, 6, 7, 8) is arranged outside of the said first section of tube with openings, whereby the second section of tube (5, 6, 7, 8) is displaceable and can be displaced and can cover or open the openings (2) in the first section of tube (1), whereby the flow of air can be regulated by displacement of the external section of tube (5, 6, 7, 8).

5. The ventilation unit according to any one of the preceding claims, whereby at least one of the sections of tube (1, 3) is provided with gaskets or spacer material (9) that seals a part of the compartment between the inner and the outer sections of tube.

6. The ventilation unit according to any one of the preceding claims, whereby the sections of tube (1, 3) have circular cross-sections.

7. The ventilation unit according to any one of the preceding claims, whereby the said displaceable section of tube (1) can be rotated relative to a connecting fixed section of tube (3), whereby the openings (2) in the wall of the tube are distributed in such a manner around the circumference of the rotatable section of tube that the principal direction of the flow of air through the wall of the tube is variable, through rotation of the displaceable section of tube (1) relative to the fixed section of tube (3).

8. The ventilation unit according to any one of the preceding claims, whereby the said openings (2) are constituted by nozzles that are either arranged in one or several longitudinal rows or distributed around the circumference in one or several axially distinct sections, or both arranged in one or several longitudinal rows and distributed around the circumference in one or several axially distinct sections.

9. The ventilation unit according to any one of the preceding claims, whereby a displaceable section of tube (1, 1') can be mounted between two fixed sections of tube (3) that are components of an air duct system, such that two or more of the ventilation units can be mounted in series with each other.

10. The ventilation unit according to claim 1,
**characterised in that**
- said displaceable section of tube (1) is connected to a fixed section of tube (3), and **in that** the displaceable section of tube (1) is provided with a cover that seals one end of the section of tube (1).

11. An air duct system for a ventilation plant, wherein
- the air duct system comprises a ventilation unit according to any of the preceding claims, wherein
- the fixed sections of tube (3) have a first dimension and where at least certain of them are provided with an end part designed for the axial connection of the corresponding displaceable section of tube (1), which serves as a supply or withdrawal unit, and
- the displaceable sections of tube (1) have a corresponding dimension that is adapted for connection to one or two of the said fixed sections of tube (3), and
- the displaceable sections of tube (1) have one or several openings (2) that are open or that can be opened in the wall of the tube next to the area of overlap (1-3),
- which openings (2) make possible the regulation of the flow of air, with respect to both its magnitude and direction, through the mutual displacement and rotation, of the relevant displaceable section of tube (1) relative to the fixed section of tube (3) connected to it.

12. The air duct system according to claim 11, whereby at least certain of the displaceable sections of tube (1) are adapted at both ends for axial displacement and rotation relative to two separate fixed sections of tube (3, 3).

13. The air duct system according to claim 11, whereby at least certain of the displaceable sections of tube (1) have a first end that can be axially connected and a second, closed, end.

14. The air duct system according to any one of claims 11-13, whereby both the fixed (3) and the displaceable (1) sections of tube have circular cross-sections, and whereby at least certain of the said displaceable sections of tube (1) can be rotated relative to a fixed section of tube (3) connected to it.

15. The air duct system according to any one of claims 11-14, whereby the ventilation unit is mounted with a ring structure or connected in series.

## Patentansprüche

1. Ein Lüftungsgerät, das dazu bestimmt ist, in einem Luftkanalsystem in einer Lüftungsanlage zumindest als Zuluft- und/oder als Ablufteinheit zu dienen,
**dadurch gekennzeichnet, dass**
- das Lüftungsgerät mindestens zwei Rohrabschnitte (1, 3) umfasst, die mit einer gemeinsamen Achse mit aneinander angepassten Abmessungen verbunden werden können,
- mindestens einer der Rohrabschnitte (3) ein feststehendes Teil darstellt, das mit dem Luftkanalsystem verbunden ist,
- mindestens einer der Rohrabschnitte (1) relativ zu mindestens einem axial verbundenen feststehenden Rohrabschnitt (3) versetzbar ist,
- zwei der entlang ihrer Achse verbindbaren Rohrabschnitte gegeneinander versetzbar sind und an ihren verbindenden Endteilen einen Überlappungsbereich (1-3) bilden, wobei nur einer dieser Rohrabschnitte (1) eine oder mehrere Öffnungen (2) aufweist, die in der Wand des Rohres neben dem Überlappungsbereich (1-3) geöffnet werden können, und
- der Luftstrom durch die eine oder die mehreren Öffnungen (2), die geöffnet werden können, sowohl in seiner Stärke als auch in seiner Richtung durch Versetzung bzw. Drehung der verschiebbaren Rohrabschnitte (1) in Relation zu dem mindestens einen feststehenden Rohrabschnitt (3) reguliert werden kann, wobei die Versetzung durch Drehung um ihre eigene Achse die Richtung des Luftstroms reguliert und die Verschiebung in axialer Richtung die Stärke des Luftstroms reguliert.

2. Lüftungsgerät nach Anspruch 1,
**dadurch gekennzeichnet, dass**
- das Lüftungsgerät mindestens drei Rohrabschnitte (1, 3, 3) umfasst, die mit einer gemeinsamen Achse mit aneinander angepassten Abmessungen verbunden werden können,
- mindestens zwei der Rohrabschnitte (3, 3) aus feststehenden Teilen des Luftkanalsystems bestehen und der dritte Rohrabschnitt (1) ein Zwischenteil darstellt, das mindestens durch Drehung versetzt werden kann und das mit der einen oder den mehreren Öffnungen (2), die geöffnet werden können (2), in der Wand des Rohres bereitgestellt ist und
- die Richtung des Luftstroms durch Drehung des versetzbaren Rohrabschnitts (1) reguliert werden kann.

3. Lüftungsgerät nach Anspruch 2,
**dadurch gekennzeichnet, dass**
das Lüftungsgerät zusätzlich mindestens einen weiteren versetzbaren Rohrabschnitt (5, 6, 8) umfasst, der außerhalb von einem der feststehenden Rohrabschnitte (3) angeordnet ist, wobei der zusätzliche Rohrabschnitt (5, 6, 8) versetz werden kann und Öffnungen (2) im dritten Rohrabschnitt (1) abdecken oder freigeben kann, wobei auch die Stärke des Luftstroms durch Verschiebung des äußeren Rohrabschnitts (5, 6, 8) reguliert werden kann.

4. Lüftungsgerät nach Anspruch 1,
**dadurch gekennzeichnet, dass**
- ein erster Rohrabschnitt (1) mit der einen oder den mehreren Öffnungen (2) in der Wand des Rohres, die geöffnet werden können, bereitgestellt ist und
- mindestens ein zweiter Rohrabschnitt (5, 6, 7, 8) außerhalb des ersten Rohrabschnitts mit Öffnungen angeordnet ist, wobei der zweite Rohrabschnitt (5, 6, 7, 8) versetzbar ist und versetzt werden kann und die Öffnungen (2) in dem ersten Rohrabschnitt (1) abdecken oder öffnen kann, wobei der Luftstrom durch Versetzung des äußeren Rohrabschnitts (5, 6, 7, 8) reguliert werden kann.

5. Lüftungsgerät nach einem der vorangehenden Ansprüche, wobei mindestens einer der Rohrabschnitte (1, 3) mit Dichtungen oder Abstandsmaterial (9) bereitgestellt ist, das einen Teil des Raums zwischen dem inneren und dem äußeren Rohrabschnitt abdichtet.

6. Lüftungsgerät nach einem der vorangehenden Ansprüche, wobei die Rohrabschnitte (1, 3) kreisförmige Querschnitte aufweisen.

7. Lüftungsgerät nach einem der vorangehenden Ansprüche, wobei der versetzbaren Rohrabschnitt (1) relativ zu einem verbindenden feststehenden Rohrabschnitt (3) gedreht werden kann, wobei die Öffnungen (2) in der Wand des Rohres derart um den Umfang des drehbaren Rohrabschnitts verteilt sind, dass die Hauptrichtung des Luftstroms durch die Wand des Rohres durch Drehung des verschiebbaren Rohrabschnitts (1) relativ zum feststehenden Rohrabschnitt (3) veränderbar ist.

8. Lüftungsgerät nach einem der vorangehenden Ansprüche, wobei die Öffnungen (2) durch Düsen ausgebildet sind, die entweder in einer oder mehreren Längsreihen angeordnet sind oder in einem oder mehreren axial getrennten Abschnitten um den Umfang verteilt sind, oder sowohl in einer oder mehreren Längsreihen angeordnet sind als auch in einem oder mehreren axial getrennten Abschnitten um den Umfang verteilt sind.

9. Lüftungsgerät nach einem der vorangehenden Ansprüche, wobei ein versetzbar Rohrabschnitt (1, 1') zwischen zwei feststehenden Rohrabschnitten (3), die Komponenten eines Luftkanalsystems sind, montiert werden kann, derart dass zwei oder mehr der Lüftungsgeräte in Reihe miteinander montiert werden können.

10. Lüftungsgerät nach Anspruch 1,
**dadurch gekennzeichnet, dass**
- der versetzbare Rohrabschnitt (1) mit einem feststehenden Rohrabschnitt (3) verbunden ist, und
dass der versetzbare Rohrabschnitt (1) mit einer Abdeckung bereitgestellt wird, die ein Ende des Rohrabschnitts (1) abdichtet.

11. Luftkanalsystem für eine Lüftungsanlage, wobei
- das Luftkanalsystem ein Lüftungsgerät nach einem der vorangehenden Ansprüche umfasst, wobei
- die feststehenden Rohrabschnitte (3) eine erste Abmessung aufweisen und mindestens bestimmte von ihnen mit einem Endteil bereitgestellt sind, das für den axialen Anschluss des entsprechenden verschiebbaren Rohrabschnitts (1) konstruiert ist, der als Zufuhr- oder Anzugseinheit dient, und
- die versetzbaren Rohrabschnitte (1) eine entsprechende Abmessung aufweisen, die für den Anschluss an einen oder zwei der feststehenden Rohrabschnitte (3) angepasst ist, und
- die versetzbaren Rohrabschnitte (1) eine oder mehrere Öffnungen (2) aufweisen, die in der Wand des Rohres neben dem Überlappungsbereich (1-3) offen sind oder geöffnet werden können,
- wobei die Öffnungen (2) die Regulierung des Luftstroms sowohl hinsichtlich seiner Stärke als auch seiner Richtung durch die gegenseitige Versetzung und Drehung des beweglichen Rohrabschnitts (1) relativ zu dem mit ihm verbundenen festen Rohrabschnitt (3) ermöglichen.

12. Luftkanalsystem nach Anspruch 11, wobei mindestens bestimmte der versetzbare Rohrabschnitte (1) an beiden Enden zur axialen Versetzung und Drehung relativ zu zwei separaten feststehenden Rohrabschnitten (3, 3) ausgelegt sind.

13. Luftkanalsystem nach Anspruch 11, wobei mindestens bestimmte der versetzbaren Rohrabschnitte (1) ein erstes Ende, das axial verbunden werden kann, und ein zweites, geschlossenes Ende aufweisen.

14. Luftkanalsystem nach einem der Ansprüche 11-13, wobei sowohl die feststehenden (3) als auch die versetzbar (1) Rohrabschnitte einen kreisförmigen Querschnitt aufweisen und wobei mindestens bestimmte der versetzbaren Rohrabschnitte (1) relativ zu einem mit ihnen verbundenen feststehenden Rohrabschnitt (3) gedreht werden können.

15. Luftkanalsystem nach einem der Ansprüche 11-14, wobei das Lüftungsgerät mit einer Ringstruktur montiert oder in Reihe geschaltet ist.

## Revendications

1. Unité de ventilation prévue pour servir d'au moins l'une parmi une unité d'alimentation et une unité d'évacuation dans un système de conduits d'air dans une installation de ventilation,
dans laquelle :
l'unité de ventilation comprend au moins deux sections de tube (1, 3) qui peuvent être raccordées avec un axe commun avec des dimensions mutuellement adaptées,
au moins l'une desdites sections de tube (3) constituent une partie fixe qui peut être raccordée audit système de conduits d'air,
au moins l'une desdites sections de tube (1) peut être déplacée par rapport à au moins une section de tube (3) fixe raccordée axialement,
deux desdites sections de tube qui peuvent être raccordées le long de leur axe sont mutuellement déplaçables et forment une zone de chevauchement (1-3) au niveau de leurs parties d'extrémité de raccordement, moyennant quoi seule l'une de ces sections de tube (1) a une ou plusieurs ouvertures (2) qui peuvent être ouvertes dans la paroi du tube à proximité de ladite zone de chevauchement (1-3), et
l'écoulement d'air à travers lesdites une ou plusieurs ouvertures (2) qui peuvent être ouvertes, peut être régulé à la fois par rapport à sa grandeur et à sa direction, par le biais du déplacement et de la rotation, respectivement des sections de tube (1) déplaçables par rapport à au moins une section de tube (3) fixe, dans laquelle le déplacement par rotation autour de son propre axe ajuste la direction de l'écoulement d'air et le déplacement dans la direction axiale ajuste la grandeur de l'écoulement d'air.

2. Unité de ventilation selon la revendication 1, **caractérisée en ce que** :
l'unité de ventilation comprend au moins trois sections de tube (1, 3, 3) qui peuvent être raccordées avec un axe commun avec des dimensions mutuellement adaptées,
au moins deux desdites sections de tube (3, 3) sont constituées par des parties fixes dudit système de conduits d'air et la troisième section de tube (1) constitue une partie intermédiaire qui peut être déplacée au moins par la rotation, et qui est prévue avec lesdites une ou plusieurs ouvertures (2) qui peuvent être ouvertes (2) dans la paroi du tube, et
la direction de l'écoulement d'air peut être régulée par le biais de la rotation de la section de tube (1) déplaçable.

3. Unité de ventilation selon la revendication 2, **caractérisée en ce que** l'unité de ventilation comprend en outre au moins une autre section de tube (5, 6, 8) déplaçable agencée à l'extérieur de l'une des sections de tube (3) fixes, moyennant quoi la section de tube (5, 6, 8) supplémentaire peut être déplacée et peut couvrir ou découvrir des ouvertures (2) dans la troisième section de tube (1), moyennant quoi la grandeur de l'écoulement d'air peut être régulée par le biais du déplacement de la section de tube (5, 6, 8) externe.

4. Unité de ventilation selon la revendication 1, **caractérisée en ce que** :
une première section de tube (1) est prévue avec lesdites une ou plusieurs ouvertures (2) dans la paroi du tube qui peuvent être ouvertes, et
au moins une deuxième section de tube (5, 6, 7, 8) est agencée à l'extérieur de ladite première section de tube avec des ouvertures, moyennant quoi la deuxième section de tube (5, 6, 7, 8) est déplaçable et peut être déplacée et peut couvrir ou ouvrir les ouvertures (2) dans la première section de tube (1), moyennant quoi l'écoulement d'air peut être régulé par le déplacement de la section de tube (5, 6, 7, 8) externe.

5. Unité de ventilation selon l'une quelconque des revendications précédentes, moyennant quoi au moins l'une des sections de tube (1, 3) est prévue avec des joints ou un matériau d'espacement (9) qui scelle une partie du compartiment entre les sections de tube interne et externe.

6. Unité de ventilation selon l'une quelconque des revendications précédentes, moyennant quoi les sections de tube (1, 3) ont des sections transversales circulaires.

7. Unité de ventilation selon l'une quelconque des revendications précédentes, moyennant quoi ladite section de tube (1) déplaçable peut être entraînée en rotation par rapport à une section de tube (3) fixe de raccordement, moyennant quoi les ouvertures (2) dans la paroi du tube sont réparties de sorte qu'autour de la circonférence de la section de tube rotative, la direction principale de l'écoulement d'air à travers la paroi du tube est variable, par le biais de la rotation de la section de tube (1) déplaçable par rapport à la section de tube (3) fixe.

8. Unité de ventilation selon l'une quelconque des revendications précédentes, moyennant quoi lesdites ouvertures (2) sont constituées par des buses qui sont agencées dans une ou plusieurs rangées longitudinales ou réparties autour de la circonférence dans une ou plusieurs sections axialement distinctes, ou à la fois agencées dans une ou plusieurs rangées longitudinales et réparties autour de la circonférence dans une ou plusieurs sections axialement distinctes.

9. Unité de ventilation selon l'une quelconque des revendications précédentes, moyennant quoi une section de tube (1, 1') déplaçable peut être montée entre deux sections de tube (3) fixes qui sont des composants d'un système de conduits d'air, de sorte que deux unités de ventilation ou plus peuvent être montées en série entre elles.

10. Unité de ventilation selon la revendication 1, **caractérisée en ce que** :
ladite section de tube (1) déplaçable est raccordée à une section de tube (3) fixe, et **en ce que** la section de tube (1) déplaçable est prévue avec un couvercle qui scelle une extrémité de la section de tube (1).

11. Système de conduits d'air pour une installation de ventilation, dans lequel :
le système de conduits d'air comprend une unité de ventilation selon l'une quelconque des revendications précédentes, dans lequel :
les sections de tube (3) fixes ont une première dimension et où au moins certaines d'entre elles sont prévues avec une partie d'extrémité conçue pour le raccordement axial de la section de tube (1) déplaçable correspondante qui sert d'unité d'alimentation ou d'extraction, et
les sections de tube (1) déplaçables ont une dimension correspondante qui est adaptée pour le raccordement aux une ou deux desdites sections de tube (3) fixes, et
les sections de tube (1) déplaçables ont une ou plusieurs ouvertures (2) qui sont ouvertes ou qui peuvent être ouvertes dans la paroi du tube à proximité de la zone de chevauchement (1-3),
lesquelles ouvertures (2) permettent de réguler l'écoulement d'air, à la fois par rapport à sa grandeur et à sa direction, par le biais du déplacement mutuel et de la rotation mutuelle, de la section de tube (1) déplaçable concernée par rapport à la section de tube (3) fixe raccordée à cette dernière.

12. Système de conduits d'air selon la revendication 11, moyennant quoi au moins certaines des sections de tube (1) déplaçables sont adaptées aux deux extrémités pour le déplacement axial et la rotation par rapport aux deux sections de tube (3, 3) fixes séparées.

13. Système de conduits d'air selon la revendication 11, moyennant quoi au moins certaines des sections de tube (1) déplaçables ont une première extrémité qui peut être axialement raccordée et une seconde extrémité fermée.

14. Système de conduits d'air selon l'une quelconque des revendications 11 à 13, moyennant quoi à la fois les sections de tube fixes (3) et déplaçables (1) ont des sections transversales circulaires, et moyennant quoi au moins certaines desdites sections de tube (1) déplaçables peuvent être entraînées en rotation par rapport à une section de tube (3) fixe raccordée à ces dernières.

15. Système de conduits d'air selon l'une quelconque des revendications 11 à 14, moyennant quoi l'unité de ventilation est montée avec une structure annulaire ou raccordée en série.
